# EUROPEAN PATENT APPLICATION

(11) **EP 4 317 703 A1**
(43) Date of publication of application: **07.02.2024**
(21) Application number: 22775067.6
(22) Date of filing: 08.03.2022
(51) Int. Cl.: F04D 29/44

(54) **ELECTRIC BLOWER**

(30) Priority: 24.03.2021 JP 2021049755
(71) Applicant: Panasonic Intellectual Property Management Co., Ltd., Kadoma-shi, Osaka 571-0057 (JP)
(72) Inventor: SHIMASAKI, Tetsuo, Osaka 571-0057 (JP); UENO, Makoto, Osaka 571-0057 (JP)
(74) Representative: SSM Sandmair
(86) International application number: PCT/JP2022/009907
(87) International publication number: WO 2022/202273

(57) **Abstract**

This electric blower includes: an electric motor having a rotary shaft; a centrifugal fan; and an air guide. The air guide has a first air guide part and a second air guide part separated in the axial direction of the rotary shaft. The first air guide part has a plurality of diffuser blades provided on the surface opposite from the second air guide part side so as to surround the centrifugal fan. The second air guide part has a plurality of guide blades on the surface opposite from the first air guide part side. The outer peripheral end of the first air guide part is located further outward than the outer peripheral end of the second air guide part. The first air guide part includes an extension blade extending toward the second air guide part from the bottom surface of the outer peripheral end of a diffuser ventilation passage that is constituted by two adjacent diffuser blades.

## Description

### TECHNICAL FIELD

The present disclosure relates to an electric blower.

### BACKGROUND ART

Electric blowers having rotating fans are used in various electric instruments such as vacuum cleaners. In an electric blower mounted on a vacuum cleaner, a centrifugal fan for providing a high suction pressure is used as a rotating fan.

The electric blower using the centrifugal fan includes, for example, an electric motor, a centrifugal fan, an air guide, a fan case, and a motor case. The centrifugal fan is attached to the rotary shaft of the electric motor. Air sent from the centrifugal fan flows into the air guide. The fan case covers the centrifugal fan and the air guide. The motor case houses the electric motor. The air guide has diffuser blades provided on the surface on the centrifugal fan side, and guide blades provided on the surface on the opposite side from the centrifugal fan side.

In the electric blower configured in this manner, when the centrifugal fan rotates, the radially outer part of the centrifugal fan becomes high pressure, and suction pressure is generated, causing air to flow into the air guide. The air that has flowed into the air guide passes between the diffuser blades where the cross-sectional area of a ventilation passage gradually increases, and decelerates, resulting in a decrease in pressure. The air that has flowed into the air guide is turned around by the ventilation passage between the side part of the air guide and the fan case and guided to the back side of the air guide. The air guided to the back side of the air guide flows into the internal space of the motor case through the ventilation passage constituted by the guide blades. The air that has flowed into the air guide is discharged to the outside through the opening of the motor case.

Conventionally, in this type of electric blower, there has been known a configuration in which an air guide is separated into two components, a first member having diffuser blades and a second member having guide blades (return blades), the first member and the second member being joined together (see, for example, PTL 1 and PTL 2).

For the diffuser blades of the air guide, it is necessary to change the number of blades, blade shape, blade spacing, and the like for each type of electric blower depending on the required characteristics of the electric blower. In this case, in order to obtain optimum efficiency as an electric blower, specifications in which the diffuser blades and the guide blades work together are desirable.

However, if the specifications are such that the diffuser blades and the guide blades work together, for the configuration in which the air guide is separated into two components as disclosed in PTLs 1 and 2, it is necessary to separately design and manufacture these two components. For this reason, the cost of manufacturing the air guide increases due to, for example, an increase in mold cost.

Meanwhile, if only the component having the diffuser blades is changed in accordance with the required characteristics of the electric blower without changing the component having the guide blades, the specifications in which the diffuser blades and the guide blades work together are no longer attained. For this reason, the conventional air guide structure does not provide the optimum efficiency of the electric blower.

### Citation List

### Patent Literature

PTL 1: Unexamined Japanese Patent Publication No. H7-158593
PTL 2: Unexamined Japanese Patent Publication No. 2020-139408

### SUMMARY OF THE INVENTION

The present disclosure has been made to address the above problems. An object of the present disclosure is to provide an electric blower capable of suppressing a decrease in efficiency even if the specifications are not such that an air guide is separated into two parts and diffuser blades and guide blades work together.

In order to achieve the above object, one aspect of an electric blower according to the present disclosure includes: an electric motor including a rotor and a rotary shaft attached to the rotor; a centrifugal fan attached to the rotary shaft; and an air guide into which air discharged from the centrifugal fan flows. The air guide has a first air guide part and a second air guide part separated in an axial direction of the rotary shaft. The first air guide part has a plurality of diffuser blades on a surface opposite from a side of the second air guide part, the plurality of diffuser blades surrounding the centrifugal fan. The second air guide part has a plurality of guide blades on a surface opposite from a side of the first air guide part. The first air guide part has an outer peripheral end that is located further outward than an outer peripheral end of the second air guide part. The first air guide part includes an extension blade extending toward the second air guide part from a bottom surface of an outer peripheral end of a diffuser ventilation passage that is constituted by two adjacent diffuser blades among the plurality of diffuser blades.

Preferably, the extension blade is coupled to an outer peripheral end of a corresponding one of the plurality of guide blades.

When viewed from the axial direction of the rotary shaft, the second air guide part preferably has an outer shape that is a continuous arc without being recessed inward of the second air guide part.

Preferably, the extension blade has an inner surface that is close to the outer peripheral end of the second air guide part.

Preferably, the extension blade extends beyond half a height of a corresponding one of the plurality of guide blades.

The plurality of diffuser blades and the plurality of guide blades may be different in number.

With the electric blower according to the present disclosure, even if the specifications are not such that the diffuser blades and the guide blades are combined to work together, it is possible to suppress a decrease in efficiency.

### BRIEF DESCRIPTION OF THE DRAWINGS

Fig. 1 is an external perspective view of an electric blower according to an exemplary embodiment.
Fig. 2 is an exploded perspective view of the electric blower according to the exemplary embodiment.
Fig. 3 is a sectional view of the electric blower according to the exemplary embodiment.
Fig. 4 is another sectional view of the electric blower according to the exemplary embodiment.
Fig. 5 is an exploded perspective view of an air guide used in the electric blower according to the exemplary embodiment as viewed obliquely from above.
Fig. 6 is an exploded perspective view of the air guide used in the electric blower according to the exemplary embodiment as viewed obliquely from below.
Fig. 7 is a perspective view of the electric blower according to the exemplary embodiment with a fan case removed.
Fig. 8 is an exploded perspective view of the electric blower illustrated in Fig. 7.
Fig. 9A is a perspective view illustrating the configurations of a centrifugal fan and the air guide in the electric blower according to the exemplary embodiment.
Fig. 9B is a top view illustrating the configurations of the centrifugal fan and the air guide in the electric blower according to the exemplary embodiment.
Fig. 9C is a rear view illustrating the configurations of the centrifugal fan and the air guide in the electric blower according to the exemplary embodiment.
Fig. 10 is an exploded perspective view of an electric blower according to a comparative example.
Fig. 11A is a perspective view illustrating the configurations of a centrifugal fan and an air guide in the electric blower according to the comparative example.
Fig. 11B is a top view illustrating the configurations of the centrifugal fan and the air guide in the electric blower according to the comparative example.
Fig. 11C is a rear view illustrating the configurations of the centrifugal fan and the air guide in the electric blower according to the comparative example.
Fig. 12 illustrates the PQ characteristic of the electric blower according to an example and the PQ characteristic of the electric blower according to the comparative example.

### DESCRIPTION OF EMBODIMENT

Hereinafter, an exemplary embodiment of the present disclosure will be described with reference to the drawings. Note that the exemplary embodiment described below illustrates one specific example of the present disclosure. Therefore, numerical values, shapes, materials, constituent elements, arrangement positions and connection forms of the constituent elements, and the like shown in the following exemplary embodiment are illustrative and are not intended to limit the present disclosure. Thus, among the constituent elements in the following exemplary embodiment, constituent elements that are not described in the independent claim indicating the highest concept of the present disclosure are described as optional constituent elements.

Note that each drawing is a schematic view and is not necessarily strictly illustrated. Furthermore, in each drawing, substantially the same constituents are denoted with the same reference marks, and redundant descriptions are omitted or simplified.

### (Exemplary Embodiment)

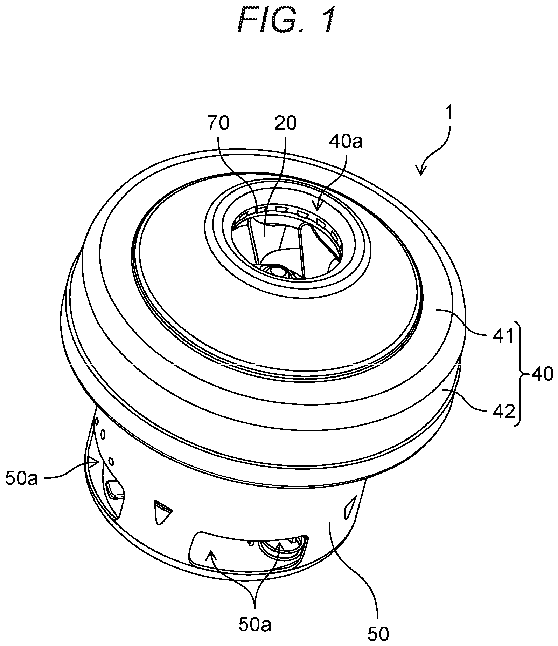

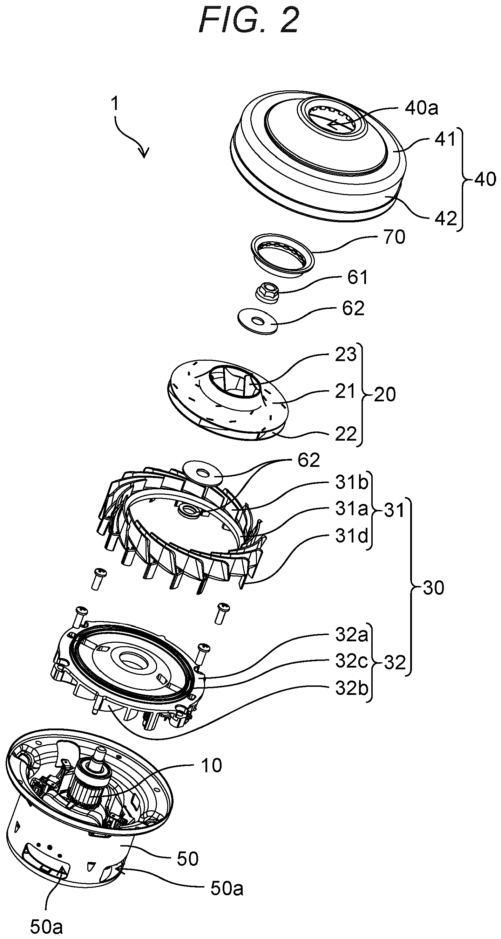

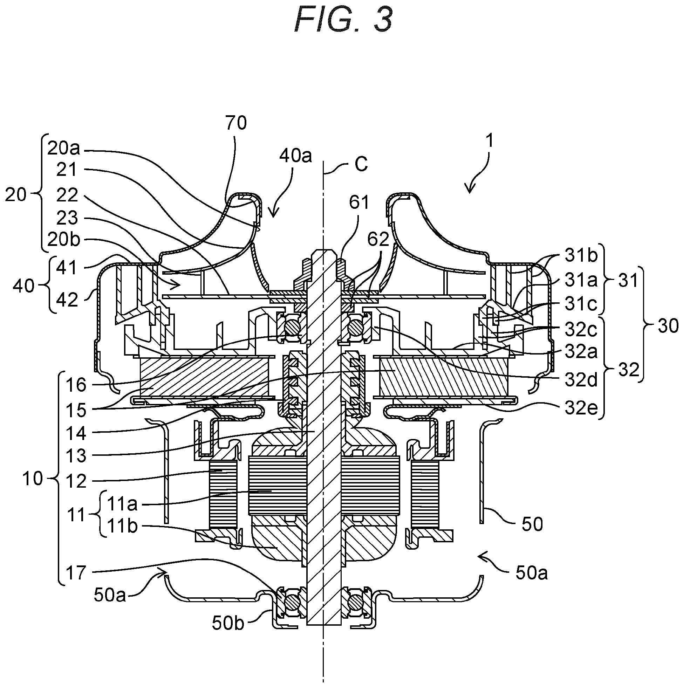

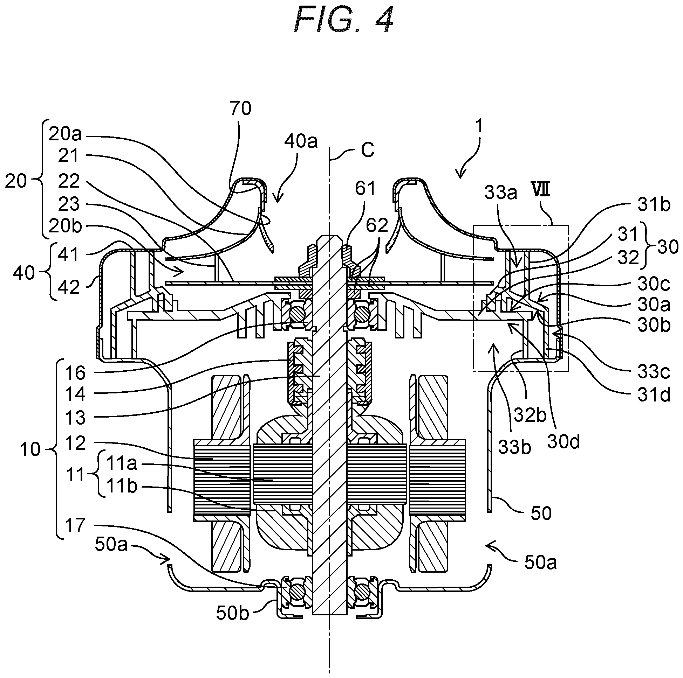

First, the overall configuration of electric blower 1 according to an exemplary embodiment will be described with reference to Figs. 1 to 4. Fig. 1 is an external perspective view of electric blower 1 according to the exemplary embodiment. Fig. 2 is an exploded perspective view of electric blower 1. Figs. 3 and 4 are sectional views of electric blower 1. Fig. 3 illustrates a cross-section taken along a plane passing through axis C of rotary shaft 13 and brush 15. Fig. 4 illustrates the cross-section when the cut surface is rotated 90 degrees from Fig. 3 in the rotation direction of rotary shaft 13. In Figs. 3 and 4, only the line drawing appearing in the cross-section is illustrated.

Further, in the following description, for convenience, the direction in which axis C of rotary shaft 13 extends is defined as the vertical direction. Specifically, in Fig. 3, in the direction in which axis C extends, the output shaft side of rotor 11 where centrifugal fan 20 is located is defined as the upper side, and the anti-output shaft side of rotor 11 where second bearing 17 is located is defined as the lower side. The vertical direction is defined for convenience in order to facilitate understanding of the following description. Therefore, the vertical direction may differ from the actual vertical direction depending on the use state of electric blower 1, or the like.

As illustrated in Figs. 1 to 4, electric blower 1 according to the present exemplary embodiment includes electric motor 10, centrifugal fan 20, air guide 30, fan case 40, and motor case 50. Electric motor 10 has rotor 11 and stator 12. Centrifugal fan 20 is attached to rotary shaft 13 of electric motor 10. Air discharged from centrifugal fan 20 flows into air guide 30. Fan case 40 covers centrifugal fan 20 and air guide 30. Motor case 50 houses electric motor 10.

Electric motor 10 is a motor that rotates centrifugal fan 20. Electric motor 10 is a commutator motor with brushes. Electric motor 10 includes rotor 11, stator 12, rotary shaft 13, commutator 14, brush 15, first bearing 16, and second bearing 17.

Rotor 11 (rotator) has rotary shaft 13. Rotor 11 is rotated about rotary shaft 13 by the magnetic force from stator 12. Rotor 11 is an inner rotor. As illustrated in Figs. 3 and 4, rotor 11 is disposed inside stator 12. Specifically, rotor 11 is surrounded by stator 12 with a minute air gap interposed therebetween.

In the present exemplary embodiment, rotor 11 is an armature. Rotor 11 has core 11a (rotor iron core) and winding coil 11b wound around core 11a. Note that in Figs. 3 and 4, winding coil 11b is schematically illustrated. Core 11a is a magnetic body made of a magnetic material. As an example, core 11a is a stacked body which is configured by a plurality of electromagnetic steel sheets being stacked in the direction (axial direction) in which axis C of rotary shaft 13 extends. Core 11a has a plurality of teeth protruding in the radial direction. When a current flows through winding coil 11b, the teeth generate a magnetic force that acts on stator 12.

Stator 12 is located to face rotor 11. Stator 12 generates a magnetic force that acts on rotor 11. Stator 12 is disposed so as to surround rotor 11. Stator 12 is configured such that N poles and S poles alternately appear in the circumferential direction on the air gap surface. In this case, stator 12 may be an armature that is constituted by a core and a winding coil wound around the core. Stator 12 may be constituted by a plurality of permanent magnets arranged along the circumferential direction. Note that stator 12 is fixed to motor case 50.

Rotary shaft 13 serves as the center about which rotor 11 rotates. Rotary shaft 13 extends in the longitudinal direction which is the direction of axis C. Rotary shaft 13 is, for example, a metal rod. Rotary shaft 13 is fixed to rotor 11. Specifically, for example, rotary shaft 13 is fixed to core 1 1a in a state penetrating the center of core 1 1a of rotor 11 so as to extend on both sides of rotor 11. As an example, rotary shaft 13 is fixed to core 11a by press-fitting or shrink-fitting into a center hole provided in core 11a.

One end (end on the centrifugal fan 20 side) of rotary shaft 13 is supported by first bearing 16. Meanwhile, the other end of rotary shaft 13 is supported by second bearing 17. As an example, first bearing 16 and second bearing 17 are ball bearings that support rotary shaft 13. In this manner, both ends of rotary shaft 13 are rotatably held by first bearing 16 and second bearing 17. The one end of rotary shaft 13 protrudes from first bearing 16. Centrifugal fan 20 is attached to the leading end of rotary shaft 13.

Commutator 14 is attached to rotary shaft 13. Commutator 14 is fixed to the part of rotary shaft 13 between rotor 11 and second bearing 17. Commutator 14 is electrically connected to winding coil 11b of rotor 11. Commutator 14 is in sliding contact with brush 15. Commutator 14 has a plurality of commutator segments that are insulated and separated from each other in the rotation direction of rotary shaft 13.

Brush 15 is a power supply brush for supplying electric power to rotor 11 by contacting commutator 14. Specifically, brush 15 supplies an armature current to commutator 14 by contacting the commutator segments of commutator 14. As an example, brush 15 is a carbon brush. Furthermore, brush 15 is a long and substantially rectangular parallelepiped.

Brush 15 is disposed in slidable contact with commutator 14. In the present exemplary embodiment, a pair of brushes 15 is provided. The pair of brushes 15 are arranged to face each other so as to hold commutator 14 therebetween. Specifically, the inner leading end of each of the pair of brushes 15 abuts on commutator 14.

Centrifugal fan 20 sucks air into an outer casing (housing) that is constituted by fan case 40 and motor case 50.

Centrifugal fan 20 is attached to a predetermined part of rotary shaft 13 of electric motor 10. Centrifugal fan 20 rotates as rotary shaft 13 rotates. In the present exemplary embodiment, centrifugal fan 20 is attached to the leading end of rotary shaft 13. Centrifugal fan 20 is inserted into rotary shaft 13 together with, for example, fastening nut 61 and a plurality of mounting plates 62. Centrifugal fan 20 is pressurized and held on rotary shaft 13 by tightening fastening nut 61. The method for fixing centrifugal fan 20 to rotary shaft 13 is not limited thereto.

Centrifugal fan 20 has suction port 20a (inlet port) for drawing in air, and blowout port 20b (exhaust port) for blowing out air drawn in through suction port 20a. Centrifugal fan 20 has first side plate 21 in which suction port 20a is provided, second side plate 22 that faces first side plate 21 with a predetermined gap therebetween, and a plurality of fan blades 23 that are held between first side plate 21 and second side plate 22. Suction port 20a of centrifugal fan 20 is a circular opening and is provided in the center of centrifugal fan 20. Each of the plurality of fan blades 23 is a plate-shaped member curved in an arc. The plurality of fan blades 23 are arranged in a radial manner. The plurality of fan blades 23 are arranged in a spiral shape at equal intervals. The space surrounded by two adjacent fan blades 23, first side plate 21, and second side plate 22 is an ventilation passage through which air flowing into centrifugal fan 20 from suction port 20a passes. The opening on the radially outer side of the ventilation passage serves as blowout port 20b. First side plate 21, second side plate 22, and fan blades 23 are made of a metal plate such as an aluminum plate. However, the present disclosure is not limited thereto.

When centrifugal fan 20 rotates, an air pressure is generated and air is drawn in through inlet port 40a of fan case 40. Specifically, when centrifugal fan 20 rotates, the pressure in the blowout port 20b vicinity of centrifugal fan 20 increases, thereby generating suction pressure. External air is drawn in through inlet port 40a of fan case 40. The air drawn into fan case 40 is drawn in through suction port 20a of centrifugal fan 20, blown out through blowout port 20b, and flows into air guide 30. That is, the air discharged from centrifugal fan 20 flows into air guide 30.

Air guide 30 straightens the flow of air discharged from centrifugal fan 20 and directs the flow of air into motor case 50. Air guide 30 is disposed between centrifugal fan 20 and rotor 11 in the direction of axis C of rotary shaft 13.

In the present exemplary embodiment, air guide 30 is separated into a plurality of parts. Specifically, air guide 30 is separated into two parts in the direction of axis C of rotary shaft 13. Two separated air guides 30 are pressed and joined together so as to be sandwiched from the direction of axis C of rotary shaft 13. Note that a detailed configuration of air guide 30 will be described later.

Air guide 30 also functions as a bracket that holds first bearing 16. Therefore, bearing holder 32d which holds first bearing 16 is provided to air guide 30. Air guide 30 also functions as a brush holder that holds brush 15. Therefore, air guide 30 has brush storage part 32e that holds brush 15.

Fan case 40 is a cover that covers centrifugal fan 20 and air guide 30. Specifically, fan case 40 is a metal cover made of a metal material. Fan case 40 has lid 41 (first fan case) that covers the upper parts of centrifugal fan 20 and air guide 30, and side wall 42 (second fan case) that laterally covers centrifugal fan 20 and air guide 30.

Fan case 40 is fixed to motor case 50. Specifically, fan case 40 and motor case 50 are fixed together by connecting side wall 42 of fan case 40 to the cylindrical part of motor case 50. Specifically, the lower end of side wall 42 of fan case 40 and the upper end of the cylindrical part of motor case 50 are press-fitted so as to overlap each other, and fan case 40 and motor case 50 are fixed to each other.

Fan case 40 has inlet port 40a (suction port) for drawing in outside air. Inlet port 40a is a circular through-hole that is provided in the center of lid 41. Inlet port 40a of fan case 40 faces suction port 20a of centrifugal fan 20. When centrifugal fan 20 rotates, air flows into fan case 40 from inlet port 40a of fan case 40.

Fan seal 70 is attached to fan case 40. Fan seal 70 is attached to lid 41 of fan case 40 so as to surround inlet port 40a of fan case 40. Fan seal 70 closes a gap, having a circular ring shape, formed between the open end of suction port 20a of centrifugal fan 20 and the open end of inlet port 40a of fan case 40. Thus, the blowing efficiency of electric blower 1 can be improved as compared with a case where fan seal 70 is not provided. That is, when centrifugal fan 20 rotates, the pressure in the blowout port 20b vicinity of centrifugal fan 20 increases. Therefore, if fan seal 70 is not provided, an air pressure difference is generated in a space path between first side plate 21 of centrifugal fan 20 and lid 41 of fan case 40, and a circulating flow from blowout port 20b of centrifugal fan 20 toward inlet port 40a of fan case 40 is generated. However, by providing fan seal 70, it is possible to reduce such circulating flow and prevent pressure from escaping. Therefore, the blowing efficiency of electric blower 1 can be improved.

Motor case 50 is a casing (frame) that houses electric motor 10. Specifically, motor case 50 houses rotor 11 and stator 12. That is, motor case 50 has rotor 11 and stator 12 therein. Motor case 50 is, for example, a metal case made of a metal material.

Motor case 50 has a bottomed cylindrical shape having an opening. Motor case 50 has a bottom and a cylindrical side wall. A plurality of exhaust ports 50a (blowout ports) for blowing out the air drawn in by the rotation of centrifugal fan 20 are provided in the bottom and side wall of motor case 50. That is, exhaust ports 50a are through-holes for exhausting the air drawn into motor case 50 by centrifugal fan 20.

Motor case 50 also functions as a bracket that holds second bearing 17. Therefore, motor case 50 has bearing holder 50b that holds second bearing 17. Bearing holder 50b is provided at the bottom of motor case 50.

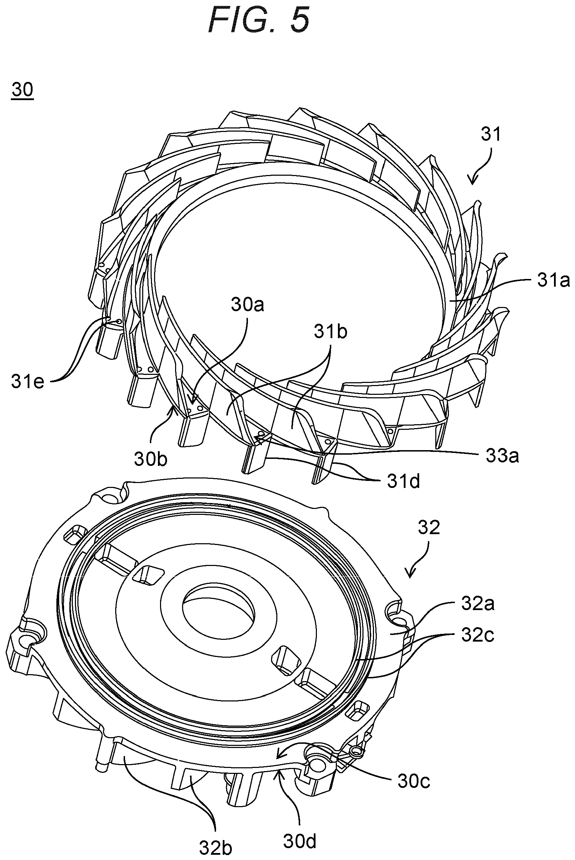

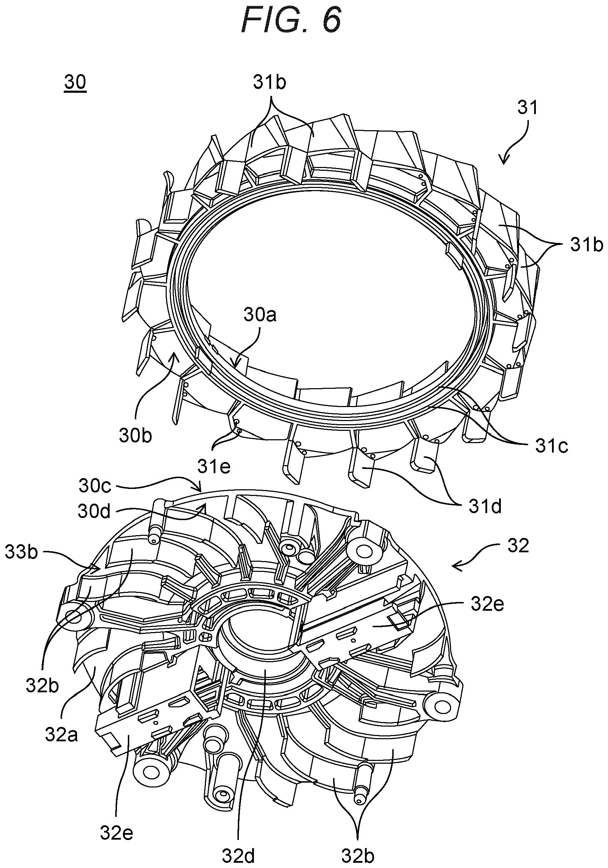

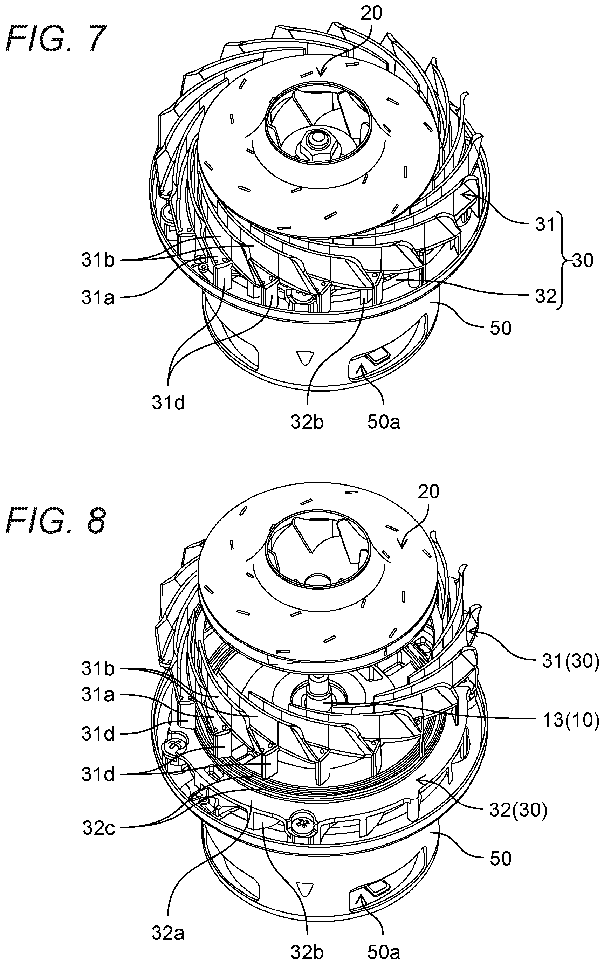

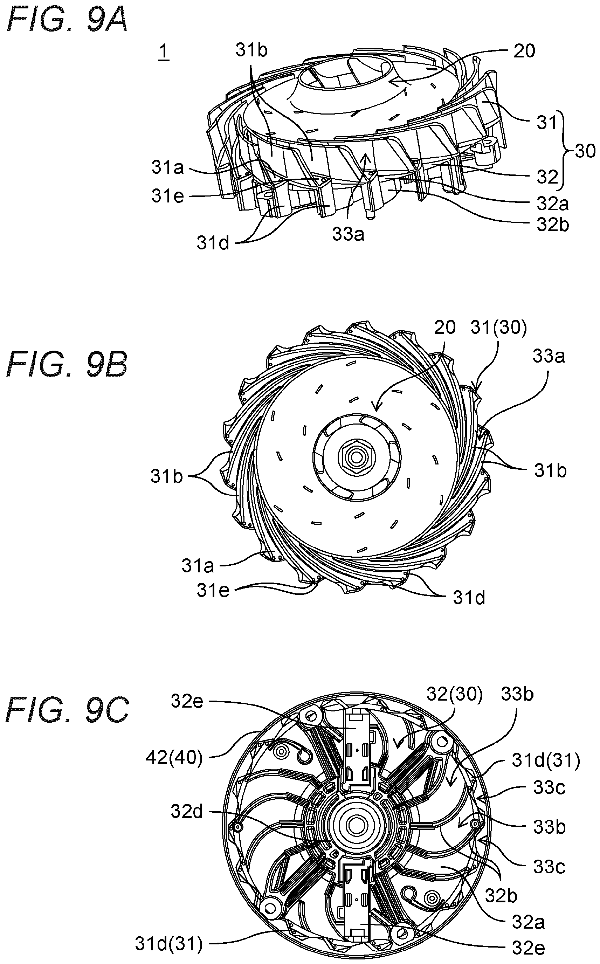

Next, a detailed configuration of air guide 30 used in electric blower 1 according to the present exemplary embodiment will be described with reference to Figs. 5 to 9C while referring to Figs. 3 and 4. Fig. 5 is an exploded perspective view of air guide 30 used in electric blower 1 according to the exemplary embodiment as viewed obliquely from above. Fig. 6 is an exploded perspective view of air guide 30 when viewed obliquely from below. Fig. 7 is a perspective view of electric blower 1 with fan case 40 removed. Fig. 8 is an exploded perspective view of the electric blower illustrated in Fig. 7. Fig. 9A is a perspective view illustrating the configurations of centrifugal fan 20 and air guide 30 in electric blower 1. Fig. 9B is a top view illustrating the configurations of centrifugal fan 20 and air guide 30 in electric blower 1. Fig. 9C is a rear view illustrating the configurations of centrifugal fan 20 and air guide 30 in electric blower 1. Only the rear view illustrated in Fig. 9C illustrates fan case 40.

As described above, air guide 30 is separated into two parts in the direction of axis C of rotary shaft 13. Specifically, as illustrated in Figs. 3 and 4, air guide 30 is separated into first air guide part 31 and second air guide part 32 in the direction of axis C of rotary shaft 13. That is, air guide 30 has two components, first air guide part 31 which is a first member and second air guide part 32 which is a second member.

Separated first air guide part 31 and second air guide part 32 are coupled and held together. Specifically, second air guide part 32 is fixed to motor case 50 by screws, and first air guide part 31 is pressed against second air guide part 32 from above by fan case 40, thereby coupling and fixing first air guide part 31 and second air guide part 32.

First air guide part 31 has first surface 30a (the upper surface of first air guide part 31 in the present exemplary embodiment) which is the surface on the opposite side (centrifugal fan 20 side) from the second air guide part 32 side, and second surface 30b (the lower surface of first air guide part 31 in the present exemplary embodiment) which is the surface on second air guide part 32 side (rotor 11 side).

Furthermore, second air guide part 32 has third surface 30c (the upper surface of second air guide part 32 in the present exemplary embodiment) which is the surface on the first air guide part 31 side (centrifugal fan 20 side), and fourth surface 30d (the lower surface of second air guide part 32 in the present exemplary embodiment) which is the surface on the opposite side (rotor 11 side) from the first air guide part 31 side.

First air guide part 31 and second air guide part 32 are joined so as to have mating surfaces in the direction of axis C of rotary shaft 13. Specifically, first air guide part 31 and second air guide part 32 are joined such that second surface 30b of first air guide part 31 and third surface 30c of second air guide part 32 face each other.

First air guide part 31 and second air guide part 32 are both made of a resin material. First air guide part 31 is made of a thermoplastic resin such as polybutylene terephthalate (PBT) or 6-nylon. Meanwhile, since second air guide part 32 is a member on the electric motor 10 side and is required to have heat resistance, second air guide part is made of a curable resin such as an unsaturated polyester resin (Bulk Molding Compound, BMC). As the curable resin, thermosetting resin or ultraviolet curable resin can be used. Note that first air guide part 31 and second air guide part 32 may be made of the same resin material instead of different resin materials.

As illustrated in Figs. 5 and 6, first air guide part 31 is formed in a substantially circular ring shape as a whole. As illustrated in Figs. 7 to 9C, first air guide part 31 having a circular ring shape is disposed so as to surround centrifugal fan 20. In the present exemplary embodiment, the inner peripheral end of the central opening of first air guide part 31 is close to the outer peripheral end of centrifugal fan 20.

As illustrated in Figs. 5 and 6, first air guide part 31 has first partition plate 31a, a plurality of diffuser blades 31b provided on first partition plate 31a, first annular protrusion 31c provided on first partition plate 31a, and extension blade 31d provided on first partition plate 31a.

First partition plate 31a is a substantially annular, plate-shaped base. The upper surface of first partition plate 31a is first surface 30a of first air guide part 31. The lower surface of first partition plate 31a is second surface 30b of first air guide part 31.

The plurality of diffuser blades 3 1b are provided on the upper surface of first partition plate 31a. That is, the plurality of diffuser blades 3 1b are provided on first surface 30a of first air guide part 31. As illustrated in Figs. 7 to 9C, the plurality of diffuser blades 31b are provided so as to surround centrifugal fan 20. Specifically, the plurality of diffuser blades 31b are provided so as to surround the lateral side of centrifugal fan 20.

As illustrated in Figs. 5 and 6, each of the plurality of diffuser blades 31b has a plate shape curved in an arc. The plurality of diffuser blades 31b are erected on the upper surface (first surface 30a) of first partition plate 31a. The plurality of diffuser blades 31b are arranged in a spiral shape about axis C of rotary shaft 13. In the present exemplary embodiment, eighteen diffuser blades 31b are provided. However, the number of diffuser blades 3 1b is not limited to eighteen.

As illustrated in Figs. 4 and 5, in first air guide part 31, a plurality of diffuser ventilation passages 33a (first ventilation passages) are formed by the plurality of diffuser blades 31b. Each of the plurality of diffuser ventilation passages 33a is an airflow path that is surrounded by two adjacent diffuser blades 31b, first partition plate 31a, and lid 41 of fan case 40. That is, diffuser ventilation passage 33a is a spatial region with the inner surfaces of the two diffuser blades 31b as a pair of side surfaces, the upper surface (first surface 30a) of first partition plate 31a as the bottom surface, and the inner surface of lid 41 of fan case 40 as the upper surface.

Diffuser ventilation passage 33a has the function of recovering pressure by gradually reducing the speed of the flow of air boosted by the rotation of centrifugal fan 20. For this reason, diffuser ventilation passage 33a is configured such that the cross-sectional area of diffuser ventilation passage 33a gradually increases from the inside to the outside of first air guide part 31. Specifically, the distance between the two adjacent diffuser blades 3 1b gradually increases from the inlet side of diffuser ventilation passage 33a, where the air discharged from centrifugal fan 20 enters, to the outlet side of diffuser ventilation passage 33a, which is outside first air guide part 31.

Note that through-hole 31e is provided at the outlet part of diffuser ventilation passage 33a in first air guide part 31. Thus, air passing through through-hole 31e can be generated without disturbing the airflow in diffuser ventilation passage 33a. Therefore, the noise of electric blower 1 can be suppressed without deteriorating the blowing performance of electric blower 1. A plurality of through-holes 31e are provided in each of the plurality of diffuser ventilation passages 33a. Specifically, two through-holes 31e each having a diameter of about 1 mm are provided in each of the plurality of diffuser ventilation passages 33a.

As illustrated in Fig. 6, first annular protrusion 31c of first air guide part 31 is provided on the lower surface of first partition plate 31a. That is, first annular protrusion 31c is provided on second surface 30b of first air guide part 31. First annular protrusion 31c is a protruding projection (annular wall) that is formed so as to protrude from the lower surface (second surface 30b) of first partition plate 31a. First annular protrusion 31c is provided in the vicinity of the outer end of centrifugal fan 20 with respect to rotary shaft 13. That is, when air guide 30 is viewed from above along the direction of axis C of rotary shaft 13, first annular protrusion 31c is provided in the vicinity of the outer end of centrifugal fan 20. Specifically, first annular protrusion 31c is formed closer to the radially outer side of first air guide part 31.

First annular protrusion 31c has a double annular shape. A circular annular groove is formed by first annular protrusion 31c having a double annular shape. That is, first annular protrusion 31c is a pair of concentrically-formed projections having a circular ring shape.

As illustrated in Figs. 5 and 6, second air guide part 32 has second partition plate 32a, a plurality of guide blades 32b (guide vanes) provided on second partition plate 32a, and second annular protrusion 32c provided on second partition plate 32a. Second air guide part 32 also has bearing holder 32d that holds first bearing 16 and brush storage part 32e that holds brush 15.

Second partition plate 32a is a disk-shaped base. The upper surface of second partition plate 32a is third surface 30c of second air guide part 32. The lower surface of second partition plate 32a is fourth surface 30d of second air guide part 32. Second partition plate 32a faces first partition plate 31a. An opening through which rotary shaft 13 passes is provided in the center of second partition plate 32a.

As illustrated in Figs. 9A and 9C, the outer shape of second air guide part 32 is an arc without being recessed inward when viewed from the axial direction of rotary shaft 13. Specifically, the outer shape of second partition plate 32a, constituting the outer shape of second air guide part 32, is a substantially circular without unevenness. That is, no cutaway part is formed at the outer peripheral end of second partition plate 32a in plan view.

The plurality of guide blades 32b are provided on the lower surface of second partition plate 32a. That is, the plurality of guide blades 32b are provided on fourth surface 30d of second air guide part 32. In this manner, the plurality of guide blades 32b are provided on the back side (opposite side from the centrifugal fan 20 side) of air guide 30. The plurality of guide blades 32b are return blades that return, radially inward, the flow of air caused to flow radially outward by first air guide part 31 and flowing into second air guide part 32 through the lateral side of second partition plate 32a.

Each of the plurality of guide blades 32b has a curved plate shape. The plurality of guide blades 32b are erected on the lower surface (fourth surface 30d) of second partition plate 32a. The plurality of guide blades 32b are arranged in a radial manner about axis C of rotary shaft 13. Specifically, the plurality of guide blades 32b are arranged in a spiral shape about axis C of rotary shaft 13.

In the present exemplary embodiment, the number of guide blades 32b is different from the number of diffuser blades 31b. Specifically, while eighteen diffuser blades 31b are provided, sixteen guide blades 32b are provided. The number of guide blades 32b is not limited to sixteen. The number of guide blades 32b and the number of diffuser blades 31b may be the same.

As illustrated in Figs. 4 and 6, in second air guide part 32, a plurality of return ventilation passages 33b (second ventilation passages) are formed by the plurality of guide blades 32b. Each of the plurality of return ventilation passages 33b is an airflow path that is surrounded by two adjacent guide blades 32b and second partition plate 32a. That is, return ventilation passage 33b is a spatial region with the inner surfaces of two guide blades 32b as a pair of side surfaces and the lower surface (fourth surface 30d) of second partition plate 32a as the upper surface.

Return ventilation passages 33b have the function of allowing air that has turned around from diffuser ventilation passages 33a, which are constituted by diffuser blades 31b on the upper side of air guide 30, and flowed into the lower side of air guide 30 to return to the center of the air guide 30 and flow below air guide 30 from the entire lower side of air guide 30, etc.

For this reason, turn-around ventilation passage 33c is formed in the lateral part of air guide 30 as an ventilation passage for allowing airflow to turn around from the plurality of diffuser ventilation passages 33a to the plurality of return ventilation passages 33b. Turn-around ventilation passage 33c is an airflow path that is surrounded by the side part of air guide 30 and side wall 42 of fan case 40.

Turn-around ventilation passage 33c is a flow-changing unit that changes the airflow direction from diffuser ventilation passages 33a to return ventilation passages 33b. For this reason, each of the plurality of diffuser ventilation passages 33a is connected to a corresponding one of the plurality of return ventilation passages 33b by turn-around ventilation passage 33c. Extension blade 31d is provided in turn-around ventilation passage 33c. Therefore, the air that has passed through diffuser ventilation passage 33a collides with side wall 42 of fan case 40 while being guided by extension blade 31d in turn-around ventilation passage 33c, and flows into return ventilation passage 33b.

As illustrated in Fig. 5, second annular protrusion 32c of second air guide part 32 is provided on the upper surface of second partition plate 32a. That is, second annular protrusion 32c is provided on third surface 30c of second air guide part 32. Second annular protrusion 32c is a protruding projection (annular wall) that is formed so as to protrude from the upper surface (third surface 30c) of second partition plate 32a. In the present exemplary embodiment, similarly to first annular protrusion 31c, second annular protrusion 32c is provided in the vicinity of the outer end of centrifugal fan 20 with respect to rotary shaft 13. That is, when air guide 30 is viewed from above along the direction of axis C of rotary shaft 13, second annular protrusion 32c is provided in the vicinity of the outer end of centrifugal fan 20. Specifically, second annular protrusion 32c is formed closer to the radially outer side of second air guide part 32.

Second annular protrusion 32c has a double annular shape. A circular annular groove is formed by second annular protrusion 32c. That is, second annular protrusion 32c is a pair of concentrically-formed projections having a circular ring shape.

As illustrated in Fig. 3, first annular protrusion 31c of first air guide part 31 is inserted into the annular groove formed by second annular protrusion 32c of second air guide part 32. Thus, first air guide part 31 and second air guide part 32 are coupled together. That is, air guide 30 has a structure in which separated first air guide part 31 and second air guide part 32 are coupled by coupling first annular protrusion 31c and second annular protrusion 32c. That is, the coupling part between first annular protrusion 31c and second annular protrusion 32c is the coupling part between first air guide part 31 and second air guide part 32.

In this manner, by inserting first annular protrusion 31c into the annular groove formed by second annular protrusion 32c, the pair of outside surfaces (wall surfaces) of first annular protrusion 31c face the pair of inside surfaces of the annular groove formed by second annular protrusion 32c.

With this configuration, even if first annular protrusion 31c and second annular protrusion 32c become the maximum upper limit or the minimum lower limit of the dimensional tolerance due to the dimensional variation of first air guide part 31 and second air guide part 32, it is possible to suppress the formation of a gap in the joint between first air guide part 31 and second air guide part 32, that is, the joint between first annular protrusion 31c and second annular protrusion 32c. Even if there is a gap in the joint between first annular protrusion 31c and second annular protrusion 32c, the ventilation passage formed by the gap has a labyrinth structure bent a plurality of times because of the intermeshing structure of first annular protrusion 31c and second annular protrusion 32c of double annular shape, so that the amount of air leakage can be suppressed. Therefore, even if air guide 30 is separated into two parts, first air guide part 31 and second air guide part 32, and the two parts are joined together, it is possible to suppress a decrease in efficiency.

In the present exemplary embodiment, first annular protrusion 31c is fitted in the annular groove formed by second annular protrusion 32c on the entire circumference of second annular protrusion 32c. Therefore, the width of first annular protrusion 31c is preferably the same as the groove width of the annular groove formed by second annular protrusion 32c on the entire circumference of first annular protrusion 31c. Thus, the pair of outside surfaces (wall surfaces) of first annular protrusion 31c and the pair of inside surfaces of the annular groove formed by second annular protrusion 32c can be brought into close contact with each other over the entire circumference of first annular protrusion 31c and second annular protrusion 32c. Thus, it is possible to further suppress the formation of a gap in the joint between first annular protrusion 31c and second annular protrusion 32c.

The outer peripheral end of first air guide part 31 is located further outward than the outer peripheral end of second air guide part 32. That is, the outer peripheral end of first partition plate 31a of first air guide part 31 is located further outward than the outer peripheral end of second partition plate 32a of second air guide part 32.

As described above, extension blade 31d is provided on first partition plate 31a of first air guide part 31. Extension blade 31d is a guide blade that allows the air that has passed through diffuser ventilation passage 33a to flow into return ventilation passage 33b through turn-around ventilation passage 33c. Extension blade 31d is provided at the outer peripheral end of first air guide part 31. Specifically, as illustrated in Figs. 4 and 5, extension blade 31d extends toward second air guide part 32 from the bottom surface of the outer peripheral end of diffuser ventilation passage 33a that is constituted by two adjacent diffuser blades 31b. That is, extension blade 31d is formed integrally and continuously with first partition plate 31a in such a manner as to be bent from the bottom surface of diffuser ventilation passage 33a. Extension blade 31d is provided in each of the plurality of diffuser ventilation passages 33a. That is, a plurality of extension blades 31d are provided at the outer peripheral end of first partition plate 31a. Each of extension blades 31d is rectangular plate-shaped, as an example. However, the present disclosure is not limited thereto.

Extension blade 31d extends to a position beyond second partition plate 32a of second air guide part 32. Specifically, extension blade 31d extends beyond half the height of guide blade 32b of second air guide part 32. In the present exemplary embodiment, extension blade 31d extends in the direction in which axis C of rotary shaft 13 extends. That is, the extension direction of the extension blade 31d is substantially perpendicular to first surface 30a (the upper surface of first partition plate 31a) of first air guide part 31. In this case, extension blade 31d extends close to the side part of the outer peripheral end of second air guide part 32. Therefore, the inner surface of extension blade 31d is close to the outer peripheral end of second air guide part 32. Specifically, the inner surface of extension blade 31d is close to or in contact with the outer peripheral end of second partition plate 32a of second air guide part 32. Extension blade 31d is coupled to the outer peripheral end of guide blade 32b of second air guide part 32.

In electric blower 1 configured in this manner, the magnetic force generated by the interaction between the magnetic flux generated in rotor 11 of electric motor 10 and the magnetic flux generated in stator 12 becomes a torque for rotating rotor 11, and rotor 11 rotates.

When rotor 11 of electric motor 10 rotates, centrifugal fan 20 fixed to rotary shaft 13 of electric motor 10 rotates, and air is drawn into fan case 40 from inlet port 40a of fan case 40. Thus, air flows into centrifugal fan 20, generating an airflow that flows from suction port 20a in the center of centrifugal fan 20 toward the outer peripheral side, and the air is discharged from blowout port 20b of centrifugal fan 20. At this time, the air flowing into centrifugal fan 20 is compressed to a high pressure by fan blades 23 of centrifugal fan 20.

The air discharged from centrifugal fan 20 flows into air guide 30 surrounding centrifugal fan 20. The air discharged from centrifugal fan 20 and flowing into air guide 30 flows radially outward (toward side wall 42 of fan case 40) through the plurality of diffuser ventilation passages 33a of first air guide part 31. The flowing air is turned around in turn-around ventilation passage 33c and then flows into return ventilation passages 33b of second air guide part 32. At this time, the air from diffuser ventilation passages 33a to turn-around ventilation passage 33c hits the inner surface of side wall 42 of fan case 40, and is turned around in turn-around ventilation passage 33c so that the airflow direction changes from outward to inward, to form a swirling flow. The air that has turned into the swirling flow flows into return ventilation passages 33b.

The air that has passed through return ventilation passages 33b of second air guide part 32 flows into motor case 50, and is discharged from exhaust ports 50a in motor case 50 to the outside of electric blower 1 while cooling the components of electric motor 10 such as rotor 11 and stator 12 of electric motor 10.

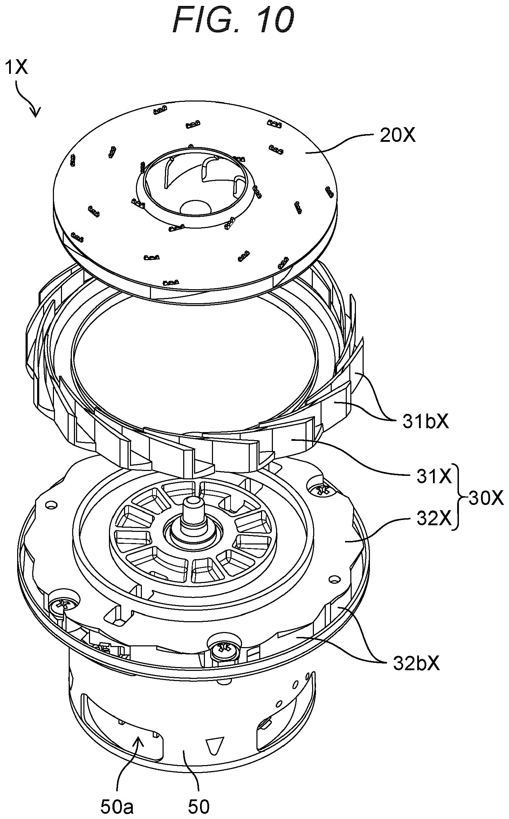

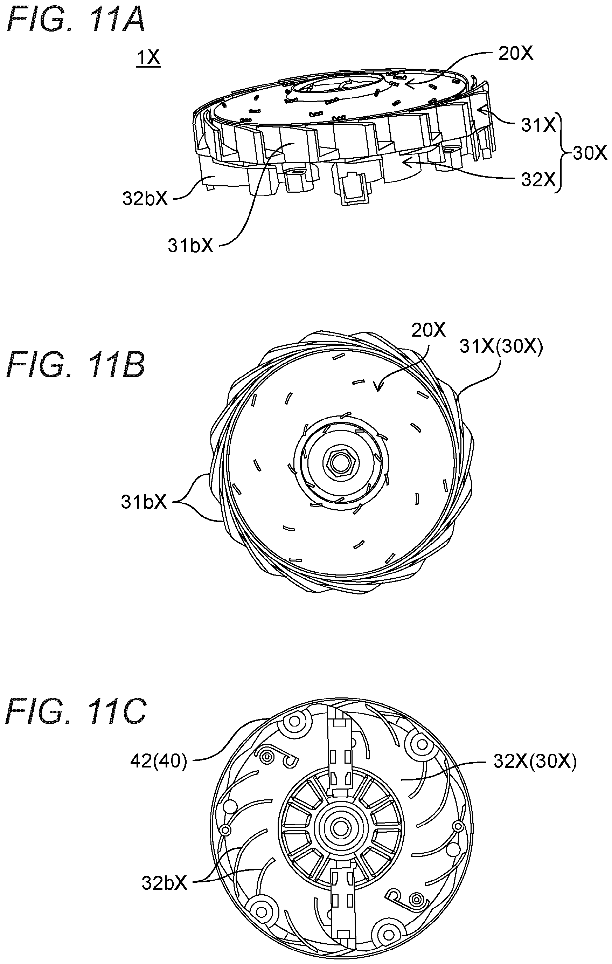

Next, the effects of electric blower 1 according to the present exemplary embodiment will be described with reference to Figs. 9A, 9B, 9C, 10, 11A, 11B, and 11C while being compared with electric blower 1X according to a comparative example. Fig. 10 is an exploded perspective view of electric blower 1X according to the comparative example. Fig. 11A is a perspective view illustrating the configurations of centrifugal fan 20X and air guide 30X in electric blower 1X according to the comparative example. Fig. 11B is a top view illustrating the configurations of centrifugal fan 20X and air guide 30X in electric blower 1X according to the comparative example. Fig. 11C is a rear view illustrating the configurations of centrifugal fan 20X and air guide 30X in electric blower 1X according to the comparative example. Note that Fig. 10 illustrates a state in which fan case 40 is removed. Only Fig. 11C illustrates fan case 40.

As in electric blower 1X illustrated in Figs. 10, 11A, 11B, and 11C, there is known a structure in which air guide 30X can be separated into first air guide part 31X having a plurality of diffuser blades 31bX and second air guide part 32X having a plurality of guide blades 32bX, and first air guide part 31X and second air guide part 32X are joined together when assembling electric blower 1X. In electric blower 1X illustrated in Figs. 10, 11A, 11B, and 11C, first air guide part 31X and second air guide part 32X are divided at the separation boundary surface between first air guide part 31X and second air guide part 32X.

Here, for diffuser blades 31bX of air guide 30X, it is necessary to change the number of blades, blade shape, and blade spacing for each product type depending on the required characteristics of electric blower 1X. In this case, in electric blower 1X according to the comparative example, in order to obtain optimum efficiency, the specifications are such that the number of guide blades 32bX of second air guide part 32X is matched to the number of diffuser blades 31bX of first air guide part 31X so that diffuser blades 31bX and guide blades 32bX work together. For example, in electric blower 1X according to the comparative example, as illustrated in Figs. 11A, 11B, and 11C, sixteen diffuser blades 31bX and sixteen guide blades 32bX are provided.

For this reason, in electric blower 1X according to the comparative example, if diffuser blades 31bX are to be changed depending on the required characteristics of electric blower 1X, guide blades 32bX also need to be changed accordingly. Therefore, the two components, first air guide part 31X having diffuser blades 31bX and second air guide part 32X having guide blades 32bX, need to be designed and manufactured separately and newly. As a result, the cost of manufacturing air guide 30X increases due to the increase in mold cost, etc.

Therefore, it is also conceivable to change only first air guide part 31X having diffuser blades 31bX without changing second air guide part 32X having guide blades 32bX. In this case, the specifications in which diffuser blades 31bX and guide blades 32bX work together are no longer attained. For this reason, the optimum efficiency of electric blower 1X cannot be obtained.

Meanwhile, as illustrated in Figs. 4 and 9, electric blower 1 according to the present exemplary embodiment has a structure in which air guide 30 is separated into first air guide part 31 and second air guide part 32, and first air guide part 31 and second air guide part 32 are joined together. However, extension blade 31d which extends toward second air guide part 32 from the bottom surface of the outer peripheral end of diffuser ventilation passage 33a constituted by two adjacent diffuser blades 31b is provided to first air guide part 31. That is, extension blade 31d, which is part of first air guide part 31, extends to the guide blade 32b side beyond the separation boundary surface between first air guide part 31 and second air guide part 32.

In this case, even if diffuser blades 31b and guide blades 32b are different in number, the point where the number differs is not in diffuser blades 31b and guide blades 32b where the airflow is smooth, but in turn-around ventilation passage 33c where air turbulence is originally caused by air turning around. For this reason, it has been found that, even if diffuser blades 31b and guide blades 32b are different in number, the loss of airflow is equivalent to the case where diffuser blades 31b and guide blades 32b are equal in number. That is, it has been found that, even if diffuser blades 31b and guide blades 32b are different in number, the reduction in the efficiency of the electric blower is limited. This is a finding from the experiments conducted by the inventors of the present application.

In electric blower 1 according to the present exemplary embodiment, as illustrated in Fig. 4, extension blade 31d extending from diffuser ventilation passage 33a toward second air guide part 32 is provided in turn-around ventilation passage 33c where the air turbulence occurs. Thus, extension blade 31d can compensate for the loss of air due to the difference in number between diffuser blades 31b and guide blades 32b without affecting the air flowing through diffuser ventilation passage 33a and return ventilation passage 33b. That is, the air discharged from diffuser ventilation passage 33a of first air guide part 31 is easily guided to return ventilation passage 33b of second air guide part 32 by extension blade 31d. As a result, even if the number of guide blades 32b does not match the number of diffuser blades 3 1b, it is possible to suppress a decrease in the efficiency of electric blower 1.

Note that according to the experiments conducted by the inventors of the present application, it has been found that by providing extension blade 31d, even if the number of guide blades 32b and the number of diffuser blades 31b do not match, it is possible to obtain efficiency equivalent to that of an electric blower with the same number of guide blades 32b and diffuser blades 31b but without extension blade 31d.

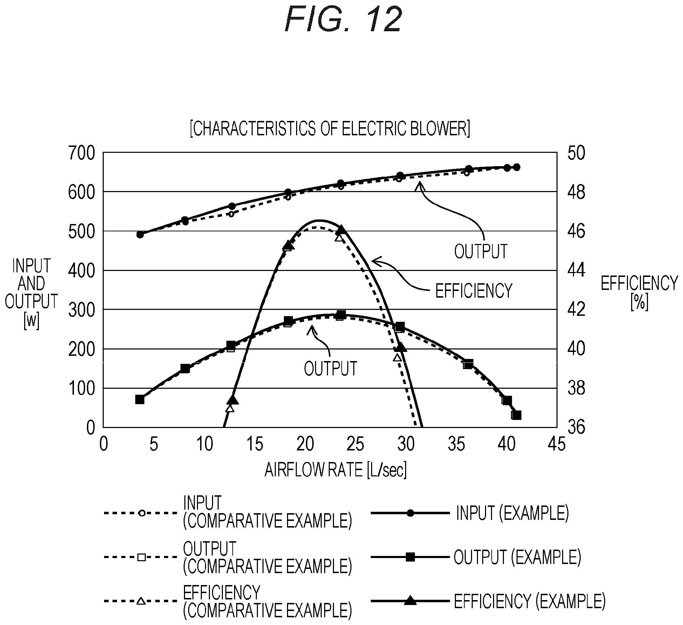

Here, an experiment was conducted to confirm that the efficiency of electric blower 1 was improved by providing extension blade 31d. The experimental results will be described. In the present experiment, the electric blower characteristics (PQ characteristics) were evaluated for electric blower 1 (Example) according to the present exemplary embodiment having air guide 30 illustrated in Figs. 9A, 9B, and 9C and electric blower 1X (Comparative Example) according to the comparative example having air guide 30X illustrated in Figs. 11A, 11B, and 11C. The results are illustrated in Fig. 12.

Fig. 12 illustrates the PQ characteristic of electric blower 1 according to the example and the PQ characteristic of electric blower 1X according to the comparative example. Electric blower 1X according to the comparative example has a structure having no extension blade 31d as compared with electric blower 1 according to the example. In Fig. 12, electric blower 1 according to the exemplary embodiment is denoted as "Example", and electric blower 1X according to the comparative example is denoted as "Comparative Example".

As shown in Fig. 12, it can be seen that electric blower 1 according to the example having extension blade 31d has higher efficiency than electric blower 1X according to the comparative example having no extension blade 31d. That is, it can be seen that the efficiency as an electric blower is improved by providing extension blade 31d on air guide 30.

As described above, with electric blower 1 according to the present exemplary embodiment, it is possible to achieve electric blower 1 capable of suppressing a decrease in efficiency even if the specifications are not such that air guide 30 is separated into two parts and diffuser blades 31b and guide blades 32b work together.

For this reason, only first air guide part 31 having diffuser blades 31b can be changed depending on the required characteristics of electric blower 1 without changing second air guide part 32 having guide blades 32b. Therefore, second air guide part 32 can be a common component with another type of electric blower having different specifications of first air guide part 31. That is, second air guide part 32 can be a common component for a plurality of different types of electric blowers.

In electric blower 1 according to the present exemplary embodiment, extension blade 31d is coupled to the outer peripheral end of guide blade 32b.

By extending extension blade 31d provided on first air guide part 31 to second air guide part 32 in this manner, the air flowing into turn-around ventilation passage 33c from diffuser ventilation passage 33a of first air guide part 31 is allowed to flow more efficiently into return ventilation passage 33b of second air guide part 32. Thus, it is possible to further suppress a decrease in the efficiency of electric blower 1.

In electric blower 1 according to the present exemplary embodiment, the inner surface of extension blade 31d is close to the outer peripheral end of second air guide part 32.

This configuration allows the air flowing into turn-around ventilation passage 33c from diffuser ventilation passages 33a of first air guide part 31 to flow more efficiently into return ventilation passages 33b of second air guide part 32. This enables further suppression of the decrease in the efficiency of electric blower 1.

In electric blower 1 according to the present exemplary embodiment, extension blade 31d extends beyond half the height of guide blade 32b.

With this configuration, the effect of extension blade 31d can be effectively exhibited, so that it is possible to effectively suppress a decrease in the efficiency of electric blower 1.

Furthermore, in electric blower 1 according to the present exemplary embodiment, when viewed from the direction of axis C of rotary shaft 13, the outer shape of second air guide part 32 is a continuous arc without being recessed inward. Specifically, the outer shape of second air guide part 32 is a substantially circular without a cutaway part.

Even if the outer shape of second air guide part 32 is such substantially circular without a cutaway part, it is possible to suppress a decrease in the efficiency of electric blower 1. This point will be described using electric blower 1X according to the comparative example illustrated in Figs. 10, 11A, 11B, and 11C.

As illustrated in Figs. 10, 11A, 11B, and 11C, in electric blower 1X according to the comparative example, the outer shape of first air guide part 31X on which diffuser blades 31bX are provided is wavy and uneven. Specifically, the outer shape of first air guide part 31X is an uneven shape with smooth cutaway parts intermittently formed along the circumferential direction at the outer peripheral end of the disk. In this case, the outer shape of second air guide part 32X on which guide blades 32bX are provided is formed in an uneven shape having cutaway parts so as to match the outer shape of first air guide part 31X on which diffuser blades 31bX are provided. This is for the following reason. The air discharged from the centrifugal fan 20 passes through the diffuser ventilation passages with gradual deceleration, and is turned around in the turn-around ventilation passage and redirected to the return ventilation passages. In this case, if the outer shape of first air guide part 31X on which diffuser blades 31bX are provided and the outer shape of second air guide part 32X on which guide blades 32bX are provided are circular, the efficiency as an electric blower decreases. For this reason, as illustrated in Fig. 10, the outer shape of first air guide part 31X and the outer shape of second air guide part 32X are formed in an uneven shape having cutaway parts.

Meanwhile, in electric blower 1 according to the present exemplary embodiment, extension blades 31d are provided. Therefore, even if the outer shape of second air guide part 32 is a substantially circular without a cutaway part, it is possible to suppress a decrease in the efficiency of electric blower 1.

As described above, electric blower 1 according to the present exemplary embodiment includes electric motor 10 including rotor 11 and rotary shaft 13 attached to rotor 11, centrifugal fan 20 attached to rotary shaft 13, and air guide 30 into which air discharged from centrifugal fan 20 flows. Air guide 30 has first air guide part 31 and second air guide part 32 separated in the axial direction of rotary shaft 13. First air guide part 31 has a plurality of diffuser blades 3 1b provided on the surface opposite from the second air guide part 32 side so as to surround centrifugal fan 20. Second air guide part 32 has a plurality of guide blades 32b on the surface opposite from the first air guide part 31 side. The outer peripheral end of first air guide part 31 is located further outward than the outer peripheral end of second air guide part 32. First air guide part 31 includes extension blade 31d extending toward second air guide part 32 from the bottom surface of the outer peripheral end of diffuser ventilation passage 33a that is constituted by two adjacent diffuser blades 31b among the plurality of diffuser blades 31b.

Thus, it is possible to suppress a decrease in the efficiency of electric blower 1 even if the specifications are not such that diffuser blades 31b and guide blades 32b are combined to work together.

Furthermore, extension blade 31d is preferably coupled to the outer peripheral end of guide blade 32b.

Furthermore, when viewed from the axial direction of the rotary shaft, preferably, the outer shape of second air guide part 32 is a continuous arc without being recessed inward of second air guide part 32.

Furthermore, the inner surface of extension blade 31d is preferably close to the outer peripheral end of second air guide part 32.

Furthermore, extension blade 31d preferably extends beyond half the height of guide blade 32b.

Furthermore, the plurality of diffuser blades 31b and the plurality of guide blades 32b may be different in number.

### (Modification)

The electric blower according to the present disclosure has been described above on the basis of the exemplary embodiment. However, the present disclosure is not limited to the above exemplary embodiment.

For example, in the above exemplary embodiment, the commutator motor with brushes is used as electric motor 10 used in electric blower 1. However, the present disclosure is not limited to this. Electric motor 10 may be a brushless motor or the like.

Furthermore, the case where electric blower 1 according to the above exemplary embodiment is applied to a vacuum cleaner has been described. However, the present disclosure is not limited thereto. Electric blower 1 may be used for air towels and the like.

In addition, the present disclosure includes other embodiments obtained by making various modifications conceived by those skilled in the art to the above exemplary embodiment, or other embodiments achieved by any combination of the constituent elements and functions in each exemplary embodiment without departing from the spirit of the present disclosure.

### INDUSTRIAL APPLICABILITY

The technology according to the present disclosure can be used for various electric devices in which an electric blower is used. The technology according to the present disclosure is particularly useful as an electric blower mounted on a vacuum cleaner or the like having a centrifugal fan.

### REFERENCE MARKS IN THE DRAWINGS

1: electric blower
10: electric motor
11: rotor
11a: core
11b: winding coil
12: stator
13: rotary shaft
14: commutator
15: brush
16: first bearing
17: second bearing
20: centrifugal fan
20a: suction port
20b: blowout port
21: first side plate
22: second side plate
23: fan blade
30: air guide
30a: first surface
30b: second surface
30c: third surface
30d: fourth surface
31: first air guide part
31a: first partition plate
31b: diffuser blade
31c: first annular protrusion
31d: extension blade
31e: through-hole
32: second air guide part
32a: second partition plate
32b: guide blade
32c: second annular protrusion
32d: bearing holder
32e: brush storage part
33a: diffuser ventilation passage
33b: return ventilation passage
33c: turn-around ventilation passage
40: fan case
40a: inlet port
41: lid
42: side wall
50: motor case
50a: exhaust port
50b: bearing holder
61: fastening nut
62: mounting plate
70: fan seal

## Claims

1. An electric blower comprising:
an electric motor including a rotor and a rotary shaft attached to the rotor;
a centrifugal fan attached to the rotary shaft; and
an air guide into which air discharged from the centrifugal fan flows,
wherein the air guide has a first air guide part and a second air guide part separated in an axial direction of the rotary shaft,
the first air guide part has a plurality of diffuser blades on a surface opposite from a side of the second air guide part, the plurality of diffuser blades surrounding the centrifugal fan,
the second air guide part has a plurality of guide blades on a surface opposite from a side of the first air guide part,
the first air guide part has an outer peripheral end that is located further outward than an outer peripheral end of the second air guide part, and
the first air guide part includes an extension blade extending toward the second air guide part from a bottom surface of an outer peripheral end of a diffuser ventilation passage that is constituted by two adjacent diffuser blades among the plurality of diffuser blades.

2. The electric blower according to Claim 1, wherein the extension blade is coupled to an outer peripheral end of a corresponding one of the plurality of guide blades.

3. The electric blower according to Claim 1 or 2, wherein when viewed from the axial direction of the rotary shaft, the second air guide part has an outer shape that is a continuous arc without being recessed inward of the second air guide part.

4. The electric blower according to any one of Claims 1 to 3, wherein the extension blade has an inner surface that is close to the outer peripheral end of the second air guide part.

5. The electric blower according to any one of Claims 1 to 4, wherein the extension blade extends beyond half a height of a corresponding one of the plurality of guide blades.

6. The electric blower according to any one of Claims 1 to 5, wherein the plurality of diffuser blades and the plurality of guide blades are different in number.
